# EUROPÄISCHE PATENTSCHRIFT

(11) **EP 3 619 466 B1**
(45) Veröffentlichungstag und Bekanntmachung des Hinweises auf die Patenterteilung: **17.08.2022**
(21) Anmeldenummer: 18723750.8
(22) Anmeldetag: 27.04.2018
(51) Int. Cl.: F21S 43/50, F21S 43/14, F21S 43/20, F21S 43/15, F21S 43/31, F21S 43/40, G03H 1/22

(54) **BELEUCHTUNGSVORRICHTUNG FÜR FAHRZEUGE**
LIGHTING DEVICE FOR VEHICLES
DISPOSITIF D'ÉCLAIRAGE POUR VÉHICULES

(30) Priorität: 02.05.2017 DE 102017109314
(43) Veröffentlichungstag der Anmeldung: 11.03.2020
(73) Patentinhaber: HELLA GmbH & Co. KGaA, 59552 Lippstadt (DE)
(72) Erfinder: KAMAU, Edwin, N., 53173 Bonn (DE); MÜGGE, Martin, 59590 Geseke (DE); MICHAELIS, Alfons, 33178 Borchen (DE)
(86) Internationale Anmeldenummer: PCT/EP2018/060915
(87) Internationale Veröffentlichungsnummer: WO 2018/202582

(56) Entgegenhaltungen:
- WO-A1-2017/102459
- WO-A1-2018/054734
- DE-A1- 4 421 306
- DE-A1-102013 108 333
- JP-A- H0 939 653
- KR-A- 20160 073 741

## Beschreibung

Die Erfindung betrifft eine Beleuchtungsvorrichtung für Fahrzeuge nach dem Oberbegriff des Patentanspruchs 1.

Aus der DE 10 2015 102 243 AI ist eine Beleuchtungsvorrichtung für Fahrzeuge mit einem Gehäuse bekannt, in dem mehrere Lichtmodule angeordnet sind. Ein Lichtmodul weist eine Lichtquelleneinheit mit einer Lichtquelle sowie einer mit einem Hologramm versehenen Optikeinheit zur Erzeugung einer holografischen Leuchtgrafik auf. Die Lichtquelle ist derart relativ zu dem Hologrammelement positioniert, dass von derselben abgestrahltes Licht unter einem vorgegebenen Rekonstruktionswinkel auf das Hologrammelement trifft und somit die gewünschte holografische Leuchtgrafik außerhalb des Gehäuses erzeugt wird. Da das Licht unter einem relativ großen Abstrahlwinkel abstrahlt, kann unerwünschtes Streulicht von Innenwänden des Gehäuses reflektiert auf das Hologrammelement treffen. Hierdurch entsteht eine zusätzliche Hintergrundhelligkeit, die zu einem verringerten Kontrast der holografischen Leuchtgrafik führt. Insbesondere wenn mehrere Lichtquellen zur Erzeugung der holografischen Leuchtgrafik eingesetzt werden, ist es wünschenswert, das Streulicht so weit wie möglich zu reduzieren.

Aus der DE 44 21 306 A1 ist eine Beleuchtungsvorrichtung für Fahrzeuge mit einem Hologrammmodul enthaltend mehrere Lichtquellen und einer Optikeinheit mit einem Hologrammelement zur Erzeugung in einer holografischen Leuchtgrafik bekannt. Die Optikeinheit umfasst einen jeweils in einer Kammer angeordneten Hologrammmoduls einen Reflektor, mittels dessen das von den jeweiligen Lichtquellen abgestrahlte Licht in Richtung des an einer Abdeckscheibe angeordneten Hologrammelementes reflektiert wird. Die Kammern sind topfförmig ausgebildet, wobei Gehäusewände als die Abstrahlung des Lichtes begrenzende Blendelemente dienen. Die Kammern sind durch Abschirmelemente voneinander getrennt, so dass das von einer Lichtquelle abgestrahlte Licht der einen Kammer nicht in die benachbarte Kammer übertreten kann, bevor es das Hologrammelement erreicht.

Aufgabe der vorliegenden Erfindung ist es daher, eine Beleuchtungsvorrichtung für Fahrzeuge mit einem Hologrammelement derart weiterzubilden, dass auf einfache Weise das Auftreten von Streulicht verhindert bzw. minimiert wird, und zwar wenn insbesondere das Hologrammelement großflächig ausgebildet ist und relativ lichtstark hinterleuchtet werden soll.

Zur Lösung dieser Aufgabe weist die Erfindung die Merkmale des Patentanspruchs 1 auf.

Nach der Erfindung wird zum einen das Auftreten von unerwünschtem Streulicht dadurch verhindert, dass mindestens ein Blendelement vorgesehen ist, mit dem ein Abstrahlwinkelbereich der Lichtquelle begrenzt werden kann, und zwar vorzugsweise so weit, dass Grenzstrahlen (größtmöglicher Winkel zur Hauptachse/optische Achse der Lichtquelle) der Lichtquelle auf einen Randbereich und/oder Rand eines Reflektors treffen. Erfindungsgemäß wird hierdurch bereits "an der Quelle" dafür gesorgt, dass im Wesentlichen Nutzlicht in eine Kammer eines so gebildeten Hologrammmoduls eintreten kann, während Streulicht an den Eintritt in die Kammer gehindert wird. Das Blendelement ist somit vorzugsweise zumindest teilweise im Bereich der Lichtquelle angeordnet.

Zum anderen ist in einem Übergangsbereich zwischen dem ersten und zweiten Reflektor der Optikeinheit ein Abschirmelement abragend angeordnet, so dass verhindert wird, dass von der Lichtquelle abgestrahltes Streulicht auf einen Reflektor trifft, der benachbart zu dem eigentlich zugeordneten Reflektor angeordnet ist. Umgekehrt bewirkt dieses Abschirmelement, dass Streulicht einer dem benachbarten Reflektor zugeordneten Lichtquelle auf den Reflektor für die erste Lichtquelle treffen kann. Die Erfindung ermöglicht somit eine weitgehende Reduzierung von Streulicht, so dass im Wesentlichen ausschließlich Nutzlicht auf den Reflektor treffen kann, der das Licht in Richtung des lichtstromabwärts angeordneten Hologrammelementes umlenkt. Der Reflektor kann somit das von der Lichtquelle abgestrahlte Licht

unter einem Rekonstruktionswinkel in Richtung des Hologrammelementes umlenken und somit eine kontrastreiche holografische Leuchtgrafik erzeugen. Die holografische Leuchtgrafik kann beispielsweise eine gesetzlich vorgegebene Leuchtfläche darstellen oder ein Hinweissymbol oder dergleichen.

Erfindungsgemäß ist die Zahl der Lichtquellen und Reflektoren dabei nicht auf zwei beschränkt. Vielmehr können auch mehr als zwei Lichtquellen mit jeweils zugeordneten Reflektoren vorgesehen sein. Erfindungsgemäß ist dann in jedem Übergangsbereich zwischen jeweils benachbarten Reflektoren ein Abschirmelement angeordnet, um das Auftreffen von Streulicht auf den jeweils nicht zugeordnete, sondern dazu benachbart angeordnete Reflektor zu verhindern.

Dabei können der erste und zweite (und ggf. weitere) Reflektoren beispielsweise einstückig ausgebildet sein.

Erfindungsgemäß sind mehrere Reflektoren als optische Bauteile mit jeweils unterschiedlich zugeordneten Lichtquellen vorgesehen, wobei das jeweils auf die Reflektoren treffende Nutzlicht in Richtung desselben Hologrammelementes reflektiert wird. Erfindungsgemäß kann hierdurch das Hologrammelement lichtstark hinterleuchtet werden. Die als Signalfunktion vorgesehene holografische Leuchtgrafik kann somit kontraststark bzw. konturenscharf erzeugt werden.

Nach einer Weiterbildung erhebt sich das Abschirmelement zwischen den Reflektoren, und zwar von einer Seite einer Erstreckungsebene der Reflektoren, die in Richtung der Lichtquelle und dem Hologrammelement weist. Das Abschirmelement dient hierbei als Trennelement zwischen Reflektoren.

Nach einer Weiterbildung der Erfindung ragt das Abschirmelement senkrecht zu der Erstreckungsebene der Reflektoren und/oder in Richtung einer optischen Achse der Reflektoren ab. Insbesondere wenn die Reflektoren das jeweils auf sie treffende Licht parallelisieren, kann durch diese Orientierung des Abschirmelementes sichergestellt werden, dass das auf die Reflektoren treffende Nutzlicht auch auf das Hologrammelement trifft.

Nach einer Weiterbildung der Erfindung sind mehrere Reflektoren in einer Reihe nebeneinander angeordnet. Die Reflektoren können dabei insbesondere einstückig miteinander verbunden sein. Den Reflektoren sind jeweils unterschiedliche Lichtquellen zugeordnet, die auf einem gemeinsamen Träger positioniert sind. Der Träger verläuft parallel zu der Reihe von Reflektoren.

Vorteilhaft kann auf diese Weise platzsparend eine lichtstarke holografische Leuchtgrafik erzeugt werden. Wenn die Reflektoren so ausgelegt und ausgerichtet sind, dass sie das jeweils auf sie fallende Licht auf unterschiedliche Hologrammelemente lenken, können hierdurch platzsparend mehrere unterschiedliche holografische Leuchtgrafiken erzeugt werden.

Nach einer Weiterbildung der Erfindung ist das Abschirmelement kraft- und/oder formschlüssig mit einer die Reflektoren aufweisenden Baueinheit verbunden. Das Abschirmelement ist somit als ein separates Bauteil zu den Reflektoren herstellbar und kann mit einer diffus wirkenden Oberflächenbeschaffenheit versehen sein. Alternativ kann das Abschirmelement an der Baueinheit angeformt ausgebildet sein.

Vorteilhaft kann das Abschirmelement einfach zusammen mit den Reflektoren insbesondere mittels eines Spritzgießwerkzeugs hergestellt werden.

Nach einer bevorzugten Ausführungsform der Erfindung sind die Abschirmelemente mit einer Antireflex-Oberfläche versehen, die durch eine Beschichtung auf einen Grundkörper aufgebracht oder die als Struktur beim Spritzgießen des Abschirmelementes verwirklicht sein kann. Vorteilhaft kann hierdurch jegliche Lichtreflexion an dem Abschirmelement vermieden werden.

Nach einer Weiterbildung der Erfindung ist das Abschirmelement als eine mattschwarze, diffus wirkende Fläche ausgebildet ist. Das Abschirmelement kann beispielsweise zusammen mit dem Reflektor durch Spritzgießen hergestellt sein, wobei lediglich der Reflektor in einem weiteren Prozessschritt mit einer verspiegelten Oberfläche versehen wird. Das Abschirmelement weist demgegenüber eine schwarze Oberfläche auf entsprechend der gewählten vorgegebenen Farbe der Kunststoffmasse.

Nach einer Weiterbildung der Erfindung ist das Abschirmelement parallelogrammförmig oder dreieckförmig ausgebildet, so dass je nach Formgebung der Reflektoren bzw. relative Positionierung zu der Lichtquelle das Nutzlicht umlenkbar ist.

Ausführungsbeispiele der Erfindung werden nachfolgend anhand der Zeichnungen näher erläutert.

Es zeigen:
- Fig. 1: eine Draufsicht auf eine Beleuchtungsvorrichtung mit separat hergestellten Abschirmelementen, die kraft- und/oder formschlüssig an einer Baueinheit befestigt sind,
- Fig. 2: eine schematische Seitenansicht der Beleuchtungsvorrichtung ohne eingezeichnete Abschirmelemente,
- Fig. 3: eine Vorderansicht der Baueinheit gemäß Figur 1,
- Fig. 4: eine perspektivische Vorderansicht einer Baueinheit mit einstückig verbundenen Abschirmelementen,
- Fig. 5: eine perspektivische Vorderansicht einer Baueinheit mit dreieckförmigen Abschlusselementen, die einstückig mit der Baueinheit verbunden sind und
- Fig. 6: eine perspektivische Draufsicht auf ein Blendelement mit Fenstern für den Durchtritt von Licht dreier beabstandet angeordneter Lichtquellen.

Eine erfindungsgemäße Beleuchtungsvorrichtung dient zur Erzeugung von Signalfunktionen, wie beispielsweise einer Schlusslicht-, einer Bremslicht-, einer Fahrtrichtungsanzeige-, einer Tagfahrlicht- oder Zusatzbremslichtfunktion. Sie kann im Heck- oder Bugbereich des Fahrzeugs oder als sonstige Leuchte, insbesondere als Innenleuchte innerhalb eines Fahrzeugs, eingesetzt werden.

Die Beleuchtungsvorrichtung sieht ein Hologrammmodul 1 zur Erzeugung einer vorgegebenen holografischen Leuchtgrafik vor, das in einem Gehäuse der Beleuchtungsvorrichtung angeordnet ist. Neben dem Hologrammmodul 1 kann innerhalb des Gehäuses der Beleuchtungsvorrichtung eine Anzahl weiterer Lichtmodule angeordnet sein zur Erzeugung anderer Lichtfunktionen. Eine Öffnung des Gehäuses ist durch eine nicht dargestellte transparente Abdeckscheibe verschlossen.

Das Hologrammmodul 1 weist eine Lichtquelleneinheit 2 mit mehreren Lichtquellen 3, 3', 3" auf. Im vorliegenden Ausführungsbeispiel sind drei Lichtquellen 3, 3', 3" in einem Abstand a zueinander auf einem gemeinsamen Träger (Leiterplatte 4) angeordnet. Die Lichtquellen 3 sind als halbleiterbasierende Lichtquellen, beispielsweise als LED-Lichtquellen oder als Laserlichtquellen ausgebildet. Die Lichtquelleneinheit 2 ist in einem unteren Bereich des Hologrammmoduls 1 angeordnet, wobei eine optische Achse 5 der Lichtquellen 3 im Wesentlichen vertikal nach oben verläuft. Die Lichtquellen 3 sind horizontal versetzt um den Abstand a angeordnet. Die Leiterplatte 4 verläuft eben und im Wesentlichen in horizontaler Richtung.

Das Hologrammmodul 1 weist darüber hinaus eine Baueinheit 6 auf, die in vertikaler Richtung oberhalb der Lichtquelleneinheit 2 angeordnet ist. Die Baueinheit 6 schließt das Hologrammmodul 1 nach oben hin ab. Die Baueinheit 6 weist mehrere Reflektoren 7, 7', 7" auf, die in einer Reihe nebeneinander angeordnet sind. Im vorliegenden Ausführungsbeispiel sind drei Reflektoren 7, 7', 7" vorgesehen, wobei die Reihe von Reflektoren 7, 7', 7" parallel zu der Leiterplatte 4 verläuft. Ein erster Reflektor 7 ist einer ersten Lichtquelle 3, ein zweiter Reflektor 7' einer zweiten Lichtquelle 3' und ein dritter Reflektor 7" einer dritten Lichtquelle 3" zugeordnet. Der Träger 4 und die Reflektoreinheit 6 sind langgestreckt ausgebildet.

Das Hologrammmodul 1 weist ferner ein im Wesentlichen vertikal verlaufendes Hologrammelement 8 auf, das als eine ebene Hologrammfläche ausgebildet ist. Das Hologrammelement 8 ist lichtstromabwärts zu den Lichtquellen 3, 3', 3" bzw. den Reflektoren 7, 7', 7" angeordnet.

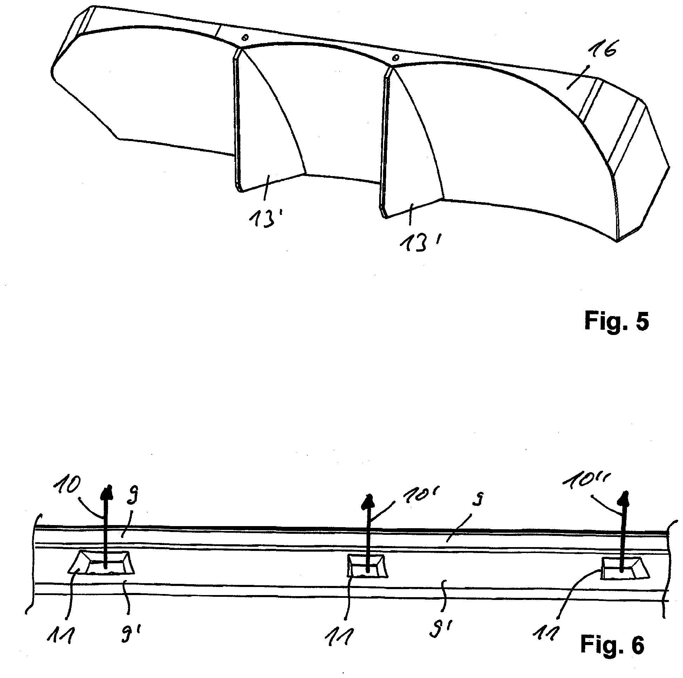

Das Hologrammmodul 1 wird durch mehrere Blendelemente 9, 9', 9" begrenzt, mittels derer die Lichtabstrahlung von den jeweiligen Lichtquellen 3, 3', 3" in Richtung der zugeordneten Reflektoren 7, 7', 7" einerseits und das von denselben reflektierte Licht in Richtung des gemeinsamen Hologrammelementes 8 andererseits begrenzt wird. Die Blendelemente 9, 9', 9" bilden zugleich eine Gehäusewandung des Hologrammmoduls 1. Die Blendelemente 9, 9' sind so angeordnet, dass von den Lichtquellen 3, 3', 3" abgestrahltes Licht 10, 10', 10" quasi aus einer Vertiefung 11 in das Hologrammmodul 1 eingestrahlt wird. In Figur 6 ist die Vertiefung 11 von oben dargestellt. Die Blendelemente 9, 9', 9" weisen vorzugsweise eine mattschwarze, diffus wirkende Fläche auf. Beispielsweise kann eine Innenseite der Blendelemente 9, 9', 9" mit einer Antireflex-Beschichtung (Mottenaugenstruktur) versehen sein. Die Blendelemente 9, 9', 9" sind vorzugsweise einstückig miteinander verbunden.

Erfindungsgemäß sind die Blendelemente 9, 9' derart angeordnet, dass von den Lichtquellen 3, 3', 3" abgestrahltes Licht 10, 10', 10" unter einem spitzen Abstrahlwinkelbereich ϕ in eine Kammer 20 des Hologrammmoduls 1 eintritt und als Nutzlicht 10, 10', 10" auf den jeweils zugeordneten Reflektor 7, 7', 7" trifft. Die Reflektoren 7, 7', 7" haben eine solch geformte Reflektorfläche, dass das Licht 10, 10', 10" im Wesentlichen parallelisiert in Richtung des Hologrammelementes 8 reflektiert wird. Das Hologrammelement 8 ist flächig ausgebildet als ein Transmissionshologrammelement, durch das das Licht 10, 10', 10" von einer rückseitigen Flachseite eintritt und an einer vorderseitigen Flachseite austritt in Hauptabstrahlrichtung H der Beleuchtungsvorrichtung. Das Hologrammelement 8 ist als ein Oberflächenhologrammelement mit einer diffraktiv-holografischen Struktur oder als ein Volumenhologrammelement mit einer transparenten Fotopolymerfolie ausgebildet. Mittels Hinterleuchtung des Hologrammelementes 8 durch das Licht 10, 10', 10" (Nutzlicht) erfolgt eine Lichtlenkung aufgrund der in dem Hologrammelement 8 eingeprägten Beugungsstruktur entsprechend einer vorgegebenen spektralen geometrischen Intensitätsverteilungsfunktion. Hierzu sind die Lichtquellen 3, 3', 3" sowie die Reflektoren 7, 7', 7" derart positioniert, dass das Licht 10, 10', 10" entsprechend der Referenz- oder Rekonstruktionsrichtung auf das Hologrammelement 8 trifft.

Damit auf den Reflektoren 7, 7', 7" jeweils das Licht 10, 10', 10" der jeweils zugeordneten Lichtquellen 3, 3' bzw. 3" trifft, ist in den Übergangsbereichen 12 der benachbarten Reflektoren 7, 7', 7" jeweils ein Abschirmelement 13 angeordnet, das aus einer Erstreckungsebene E der Baueinheit 6 in Richtung des Hologrammelementes 8 abragt. Das Abschirmelement 13 ist parallelogrammartig ausgebildet und verläuft im Wesentlichen in Richtung einer optischen Achse 14 der Reflektoren 7, 7' bzw. 7". Hierdurch ist gewährleistet, dass das gesamte Nutzlicht 10, 10', 10" von den jeweiligen Reflektoren 7, 7', 7" in Richtung des Hologrammelementes 8 reflektiert werden kann. Unerwünschtes Streulicht 15 der ersten Lichtquelle 3 bzw. Streulicht 15' der zweiten Lichtquelle 3' sowie Streulicht 15" der dritten Lichtquelle 3", das ohne Vorliegen der Abschirmelemente 13 auf die benachbarten bzw. denselben nicht zugeordneten Reflektoren 7, 7', 7" treffen würde, wird an dem Auftreffen auf die Reflektoren 7, 7', 7" gehindert bzw. wird durch das Abschirmelement 13 absorbiert. Zu diesem Zweck weisen die Abschirmelemente 13 jeweils eine nicht reflektierende Oberfläche bzw. eine schwarze und/oder mattierte Oberfläche und gegebenenfalls eine Antireflex-Oberflächenbeschichtung auf. Das auf die Abschirmelemente 13 auftreffende Streulicht 15, 15', 15" wird somit absorbiert und kann nicht in dem Hologrammmodul 1 herumvagabundieren.

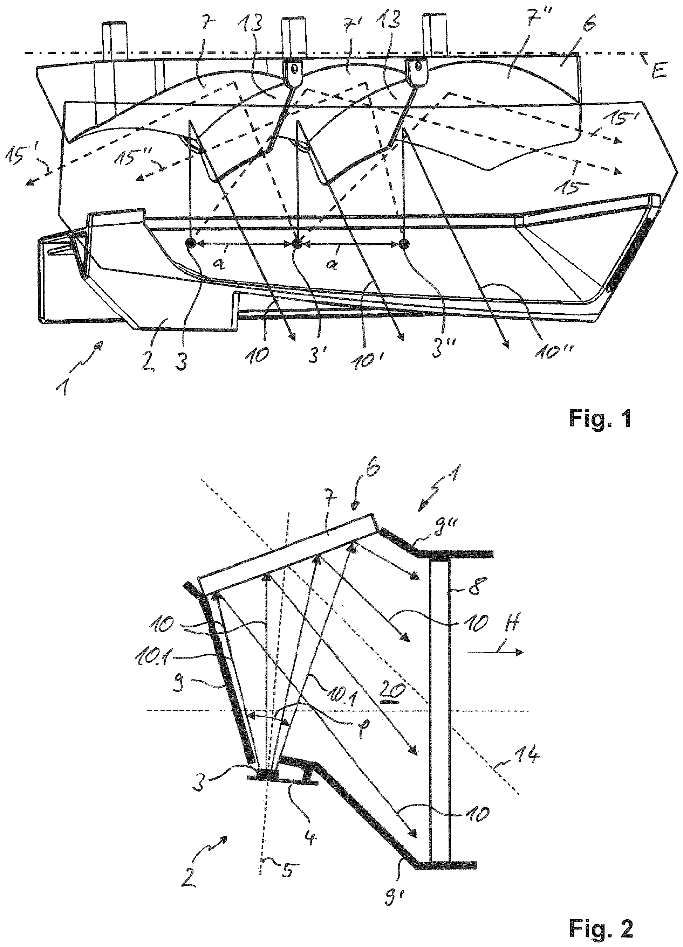

In Figur 1 ist schematisch der Verlauf des Streulichtes 15, 15', 15" eingezeichnet, für den Fall, dass keine Abschirmelemente 13 vorliegen. In diesem Fall würde Streulicht erzeugt werden, das für eine zusätzliche Hintergrundhelligkeit sorgen würde, die nicht gewünscht ist. Das Streulicht 15, 15', 15" ist in Figur 1 gestrichelt dargestellt. Das Nutzlicht 10, 10', 10" ist in Figur 1 mit einer durchgezogenen Linie dargestellt.

Die Blendelemente 9, 9', 9" sind derart angeordnet bzw. ausgebildet, dass Grenzstrahlen 10.1 des Lichtbündels 10, 10', 10" auf den Übergangsbereich 12 der Reflektoren 7, 7', 7" treffen.

Die Reflektoren 7, 7', 7" der Baueinheit 6 sind einstückig miteinander verbunden. Die Baueinheit 6 kann beispielsweise durch Spritzgießen hergestellt sein. Die Abschirmelemente 13 sind jeweils als gesonderte Bauteile hergestellt, die kraft- und/oder formschlüssig mit der Reflektoreinheit 6 verbunden sind. Die Abschirmelemente 13 erstrecken sich jeweils flächig von Übergangsbereichen 12 benachbarter Reflektoren 7, 7', 7".

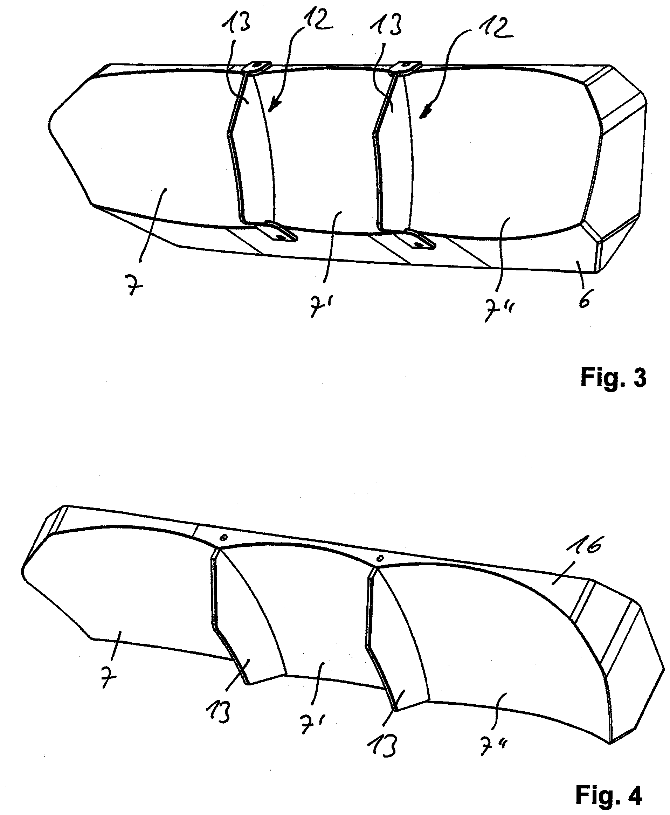

Nach einer weiteren Ausführungsform einer Baueinheit 16 gemäß Figur 4 können die Abschirmelemente 13 auch einstückig mit der Reflektoreinheit 16 verbunden sein. Bei dieser Ausführung werden die Abschirmelemente 13 zusammen mit den Reflektoren 7, 7', 7" durch Spritzgießen hergestellt, wobei die Reflektoren 7, 7', 7" zusätzlich mit einer spiegelnden Oberflächenbeschichtung versehen werden. Die Abschirmelemente 13 können unbehandelt bleiben und bestehen aus einem schwarzen Kunststoffmaterial.

Nach einer weiteren Ausführungsform der Erfindung gemäß Figur 5 können Abschirmelemente 13' auch dreieckförmig ausgebildet sein. Gegebenenfalls können die Abschirmelemente nach einer weiteren nicht dargestellten Ausführungsform der Erfindung auch trapezförmig ausgebildet sein. Die Form der Abschirmelemente 13, 13' ist abhängig von der relativen geometrischen Anordnung der jeweiligen Lichtquellen 3, 3', 3", den Reflektoren 7, 7', 7" und dem Hologrammelement 8.

Gleiche Bauteile bzw. Bauteilfunktionen der Ausführungsbeispiele sind mit den gleichen Bezugszeichen versehen.

### Bezugszeichenliste

- 1: Hologrammmodul
- 2: Lichtquelleneinheit
- 3,3',3": Lichtquellen
- 4: Träger
- 5: optische Achse
- 6: Baueinheit
- 7,7',7": Reflektor
- 8: Hologrammelement
- 9,9',9": Blendelemente
- 10,10',10": Licht
- 11: Vertiefung
- 12: Randbereich
- 13,13': Abschirmelement
- 14: optische Achse
- 15,15',15": Streulicht
- 16: Baueinheit
- 20: Kammer
- E: Erstreckungsebene
- a: Abstand
- H: Hauptabstrahlrichtung
- ϕ: Abstrahlwinkelbereich

## Patentansprüche

1. Beleuchtungsvorrichtung für Fahrzeuge mit einem durch eine transparente Abdeckscheibe verschlossenen Gehäuse, in dem ein Hologrammmodul (1) enthaltend eine Lichtquelleneinheit (2) mit einer ersten und einer zweiten Lichtquelle (3, 3', 3") und eine Optikeinheit mit einem Hologrammelement (8) zur Erzeugung einer holografischen Leuchtgrafik, angeordnet ist,
- wobei die Optikeinheit ein der ersten Lichtquelle (3, 3', 3") zugeordneten ersten Reflektor (7, 7', 7") und ein der zweiten Lichtquelle (3, 3', 3") zugeordneten zweiten Reflektor (7, 7', 7") aufweist, mit denen von der jeweils zugeordneten Lichtquelle (3, 3', 3") abgestrahltes Licht (10, 10', 10") in Richtung des Hologrammelementes (8) lenkbar ist, und
- wobei in einem Übergangsbereich (12) zwischen dem ersten und dem zweiten Reflektor (7, 7', 7") ein Abschirmelement (13, 13') derart abragt, dass von der ersten Lichtquelle (3, 3', 3") abgestrahltes Streulicht (15, 15', 15"), das nicht auf den zugeordneten ersten Reflektor (7, 7', 7") trifft, an dem Auftreffen auf den benachbarten zweiten Reflektor (7') gehindert wird und dass umgekehrt von der zweiten Lichtquelle (3, 3', 3") abgestrahltes Streulicht (15, 15', 15"), das nicht auf den zweiten Reflektor (7, 7', 7") trifft, an dem Auftreffen auf den ersten Reflektor (7, 7', 7") gehindert wird,
**dadurch gekennzeichnet, dass** die Optikeinheit mindestens ein Blendelement (9, 9', 9") zur Begrenzung eines Abstrahlwinkelbereiches (ϕ) der Lichtquellen (3, 3', 3") aufweist, und dass die Blendelemente (9,9') so angeordnet sind,
dass von den Lichtquellen (3, 3', 3") abgestrahltes Licht (10, 10', 10") aus einer durch das mindestens ein Blendelement (9, 9') gebildeten Vertiefung (11) in das Hologrammmodul (1) eingestrahlt wird, wobei das abgestrahlte Licht (10, 10', 10") unter einem spitzen Abstrahlwinkelbereich (ϕ) in eine Kammer (20) des Hologrammmoduls (1) eintritt und als Nutzlicht (10, 10', 10") auf den jeweils zugeordneten Reflektor (7, 7', 7") trifft.

2. Beleuchtungsvorrichtung nach Anspruch 1, **dadurch gekennzeichnet, dass** auf einer der Lichtquellen (3, 3', 3") und dem Hologrammelement (8) zugewandten Seite eine Erstreckungsebene (E) des Reflektors liegt.

3. Beleuchtungsvorrichtung nach Anspruch 1 oder 2, **dadurch gekennzeichnet, dass** das Abschirmelement (13, 13') senkrecht zu der Erstreckungsebene (E) und/oder in Richtung einer optischen Achse (14) des Reflektors (7, 7', 7") abragt.

4. Beleuchtungsvorrichtung nach einem der Ansprüche 1 bis 3, **dadurch gekennzeichnet, dass** mehrere Reflektoren (7, 7', 7") in einer Reihe nebeneinander angeordnet und einstückig miteinander verbunden sind einerseits und dass die jeweils den Reflektoren (7, 7', 7") zugeordneten Lichtquellen (3, 3', 3") auf einem gemeinsamen Träger (4) beabstandet zueinander und parallel zur Reihe der Reflektoren (7, 7', 7") angeordnet sind andererseits.

5. Beleuchtungsvorrichtung nach einem der Ansprüche 1 bis 4, **dadurch gekennzeichnet, dass** das mindestens eine Abschirmelementen (13, 13') kraft-und/oder formschlüssig mit einer die Reflektoren (7, 7', 7") aufweisenden Baueinheit (6) verbunden ist.

6. Beleuchtungsvorrichtung nach einem der Ansprüche 1 bis 4, **dadurch gekennzeichnet, dass** das mindestens eine Abschirmelement (13, 13') an einer die Reflektoren (7, 7', 7") aufweisenden Baueinheit (6) angeformt ist.

7. Beleuchtungsvorrichtung nach einem der vorhergehenden Ansprüche, **dadurch gekennzeichnet, dass** das mindestens eine Abschirmelement (13, 13') mit einer Antireflex-Oberfläche versehen ist.

8. Beleuchtungsvorrichtung nach einem der Ansprüche 1 bis 7, **dadurch gekennzeichnet, dass** das mindestens eine Abschirmelement (13, 13') als eine mattschwarze, diffus wirkende Fläche ausgebildet ist.

9. Beleuchtungsvorrichtung nach einem der Ansprüche 1 bis 8, dass das mindestens eine Abschirmelement (13, 13') parallelogrammförmig oder dreieckförmig oder trapezförmig ausgebildet ist.

## Claims

1. Illumination device for vehicles with a housing closed off by a transparent covering plate in which a hologram module (1) is arranged containing a light source unit (2) with a first and a second light source (3, 3', 3") and an optical unit with a hologram element (8) for generating a illuminated holographic figure,
- where
the optical unit features a first reflector (7, 7', 7") allocated to the first light source (3, 3', 3") and a second reflector (7, 7', 7") allocated to the second light source (3, 3', 3") by means of which light (10, 10', 10") emitted from the respective allocated light source (3, 3', 3") can be deflected in the direction of the hologram element (8), and
- where
a screening element (13, 13') protrudes in a transitional area (12) between the first and the second reflector (7, 7', 7") in such a way that scattered light (15, 15', 15") emitted by the first light source (3, 3', 3") that does not hit the allocated first reflector (7, 7', 7") is prevented from hitting the adjacent second reflector (7') and that, the other way round, scattered light (15, 15', 15") emitted by the second light source (3, 3', 3") that does not hit the second reflector (7, 7', 7") is prevented from hitting the first reflector (7, 7', 7"),
**characterised in that** the optical unit features at least one aperture element (9, 9', 9") for limiting a emission angle range (φ) of the light sources (3, 3', 3"), and **in that** the aperture elements (9, 9') are arranged in such a way
that light (10, 10', 10") emitted from the light sources (3, 3', 3") is shone out of the recess (11) formed by the at least one aperture element (9, 9') into the hologram module (1), where the emitted light (10, 10', 10") enters a chamber (20) of the hologram module (1) at an acute emission angle range (φ) and hits the respective allocated reflector (7, 7', 7") as useful light (10, 10', 10").

2. Illumination device in accordance with Claim 1, **characterised in that** on a side facing light sources (3, 3', 3") and the hologram element (8) there is an extension level (E) of the reflector.

3. Illumination device in accordance with Claim 1 or 2, **characterised in that** the screening element (13, 13') protrudes vertically to the extension level (E) and/or in the direction of an optical axis (14) of the reflector (7, 7', 7").

4. Illumination device in accordance with one of Claims 1 through 3, **characterised in that** several reflectors (7, 7', 7") are arranged in a row next to each other and are firstly connected to each other as one piece and **in that** the light sources (3, 3', 3") allocated in each case to the reflectors (7, 7', 7") are arranged at distances to each other on a shared carrier (4) and in parallel to the row of reflectors (7, 7', 7").

5. Illumination device in accordance with one of Claims 1 through 4, **characterised in that** the at least one screening element (13, 13') is connected in a force and/or form-locking manner with an assembly (6) featuring the reflectors (7, 7', 7").

6. Illumination device in accordance with one of Claims 1 through 4, **characterised in that** the at least one screening element (13, 13') is moulded onto an assembly (6) featuring the reflectors (7, 7', 7").

7. Illumination device in accordance with one of the previous claims, **characterised in that** the at least one screening element (13, 13') has been provided with an antireflective surface.

8. Illumination device in accordance with one of Claims 1 through 7, **characterised in that** the at least one screening element (13, 13') takes the form of a matt black surface with a diffuse appearance.

9. Illumination device in accordance with one of Claims 1 through 8 **characterised in that** at least one screening element (13, 13') is designed in the shape of a parallelogram or in the shape of a triangle or in the shape of a trapezium.

## Revendications

1. Dispositif d'éclairage pour véhicules avec un boîtier fermé par une plaque de recouvrement transparente dans lequel est disposé un module d'hologramme (1) contenant une unité de source de lumière (2) avec une première et une deuxième source de lumière (3, 3', 3") et une unité d'hologramme avec un élément d'hologramme (8) pour générer un graphique lumineux holographique,
- où
l'unité optique présente un premier réflecteur (7, 7', 7") associé à la première source de lumière (3, 3', 3") et un deuxième réflecteur (7, 7', 7") associé à la deuxième source de lumière (3, 3', 3"), avec lesquels la lumière (10, 10', 10") émise par la source de lumière (3, 3', 3") respectivement associée peut être dirigée en direction de l'élément holographique (8), et
- où
dans une zone de transition (12) entre le premier et le deuxième réflecteur (7, 7', 7"), un élément de blindage (13, 13') fait saillie de telle sorte que la lumière diffusée (15, 15', 15") émise par la première source de lumière (3, 3', 3"), qui n'atteint pas le premier réflecteur affecté (7, 7', 7"), est empêchée d'atteindre le deuxième réflecteur (7') voisin et qu'inversement, la lumière diffusée (15, 15', 15") émise par la deuxième source de lumière (3, 3', 3"), qui n'atteint pas le deuxième réflecteur (7, 7', 7"), est empêchée d'atteindre le premier réflecteur (7, 7', 7"),
**caractérisé en ce que** l'unité optique comprend au moins un élément de diaphragme (9, 9', 9") pour limiter une plage d'angles de rayonnement (φ) des sources de lumière (3, 3', 3"), et **en ce que** les éléments de diaphragme (9, 9') sont disposés de telle sorte
que la lumière (10, 10', 10") émise par les sources de lumière (3, 3', 3") est irradiée dans le module d'hologramme (1) à partir d'un creux (11) formé par au moins un élément de diaphragme (9, 9'), la lumière émise (10, 10', 10") pénétrant dans une chambre (20) du module d'hologramme (1) sous une plage d'angle de rayonnement (φ) aigu et atteint le réflecteur (7, 7', 7") respectivement associé en tant que lumière utile (10, 10', 10").

2. Dispositif d'éclairage selon la revendication 1, **caractérisé en ce qu'**un plan d'extension (E) du réflecteur se trouve sur un côté orienté vers les sources de lumière (3, 3', 3") et l'élément d'hologramme (8).

3. Dispositif d'éclairage selon la revendication 1 ou 2, **caractérisé en ce que** l'élément de blindage (13, 13') fait saillie perpendiculairement au plan d'extension (E) et/ou en direction d'un axe optique (14) du réflecteur (7, 7', 7").

4. Dispositif d'éclairage selon l'une des revendications 1 à 3, **caractérisé en ce que** plusieurs réflecteurs (7, 7', 7") sont disposés côte à côte sur une rangée et reliés entre eux d'un seul tenant, d'une part, et **en ce que** les sources de lumière (3, 3', 3") associées respectivement aux réflecteurs (7, 7', 7") sont disposées sur un support commun (4) à distance les unes des autres et parallèlement à la rangée de réflecteurs (7, 7', 7"), d'autre part.

5. Dispositif d'éclairage selon l'une des revendications 1 à 4, **caractérisé en ce qu'**au moins un élément de blindage (13, 13') est relié par adhérence et/ou engagement à un unité (6) comportant les réflecteurs (7, 7', 7").

6. Dispositif d'éclairage selon l'une des revendications 1 à 4, **caractérisé en ce qu'**au moins un élément de blindage (13, 13') est formé sur une unité (6) comportant les réflecteurs (7, 7', 7").

7. Dispositif d'éclairage selon l'une des revendications précédentes, **caractérisé en ce qu'**au moins un élément de blindage (13, 13') est pourvu d'une surface antireflet.

8. Dispositif d'éclairage selon l'une des revendications 1 à 7, **caractérisé en ce qu'**au moins un élément de blindage (13, 13') est réalisé sous la forme d'une surface noire mate à effet diffus.

9. Dispositif d'éclairage selon l'une des revendications 1 à 8, **caractérisé en ce qu'**au moins un élément de blindage (13, 13') est réalisé sous la forme d'un parallélogramme, d'un triangle ou d'un trapèze.
